# FASCICULE DE BREVET EUROPEEN

(11) **EP 2 516 190 B1**
(45) Date de publication et mention de la délivrance du brevet: **02.10.2013**
(21) Numéro de dépôt: 10807457.6
(22) Date de dépôt: 06.12.2010
(51) Int. Cl.: B60K 37/02

(54) **VEHICULE AUTOMOBILE COMPORTANT UN GROUPE ELECTROMOTEUR ET SON MODULE D'ALIMENTATION ELECTRIQUE DISPOSES AU VOISINAGE D'UN TRAIN ROULANT DU VEHICULE**
KRAFTFAHRZEUG MIT IN DER NÄHE EINES FAHRWERKS DES FAHRZEUGES ANGEORDNETER ELEKTROMOTORISCHER EINHEIT UND STROMVERSORGUNGSMODUL DAFÜR
MOTOR VEHICLE HAVING AN ELECTROMOTIVE UNIT AND THE POWER SUPPLY MODULE THEREOF ARRANGED IN THE VICINITY OF A RUNNING GEAR OF THE VEHICLE

(30) Priorité: 22.12.2009 FR 0959420
(43) Date de publication de la demande: 31.10.2012
(73) Titulaire: Peugeot Citroën Automobiles SA, 78140 Vélizy Villacoublay (FR)
(72) Inventeur: AKOUM, Hassan, F-92210 Saint-cloud (FR); CIESIELSKI, Olivier, F-92400 Courbevoie (FR)
(74) Mandataire: Rosenberg, Muriel Sylvie
(86) Numéro de dépôt international: PCT/FR2010/052617
(87) Numéro de publication internationale: WO 2011/083224

(56) Documents cités:
- EP-A2- 1 266 783
- WO-A1-2009/031331

## Description

La présente invention concerne les véhicules automobile de type hybride thermique/électrique ou tout électrique, rechargeable ou non.

De tels véhicules comportent au moins une machine électrique de traction alimentée par un module d'alimentation électrique, ladite machine étant disposée au voisinage d'un train roulant pour l'entraînement des roues de ce train.

On désignera par groupe électromoteur l'ensemble formé par la machine électrique et un réducteur de vitesses couplée sur l'arbre de sortie de la machine solidaire du rotor de la machine électrique.

Le réducteur permet d'adapter la vitesse de la machine électrique au couple demandé aux roues du véhicule.

On désignera par module d'alimentation électrique, l'ensemble formé par un bloc de batteries d'accumulateur électrique et une unité électronique de puissance. Une telle unité de puissance comporte notamment un circuit convertisseur de tension continue DC/DC pour adapter la tension délivrée par le bloc de batteries avec celle acceptée par le réseau de bord qui est en général de l'ordre de 12 V et un circuit onduleur qui permet de transformer la tension continue délivré par le bloc de batteries en tension alternative quand la machine travaille en mode générateur. L'unité de puissance peut être solidaire du bloc de batteries ou déportée de ce dernier

Dans le cas d'un véhicule dit à traction avant, c'est-à-dire un véhicule dont le moteur thermique est couplé au train avant du véhicule pour l'entraînement du véhicule, le coffre est naturellement disposé à l'arrière du véhicule derrière le dernier rang de sièges du véhicule.

Le coffre est délimité par la partie arrière du toit du véhicule et par un plancher appelé généralement plancher de coffre qui sépare et isole le coffre de la caisse du véhicule supportant le train roulant arrière du véhicule.

La caisse dans cette région, supporte également le pot d'échappement voire même le réservoir d'essence ou une partie du réservoir.

La hauteur du coffre entre le plancher de coffre et l'arrière du toit du véhicule, définissant la hauteur du coffre suivant l'axe en Z, dans un référentiel à trois dimensions utilisé habituellement pour repérer un véhicule dans l'espace, est donc dépendant de l'encombrement des organes mentionnés ci-dessus qui sont situés directement sous le plancher de coffre.

On rappelle qu'un train roulant arrière peut être par exemple du type train arrière à traverse déformable.

Ce type de train a une forme générale de "H", les deux branches parallèles du H définissant respectivement des bras longitudinaux, et la barre centrale du H définissant une barre de torsion transversale appelée traverse déformable qui intègre une barre dite anti devers appelée également barre antiroulis.

Les premières extrémités des bras longitudinaux sont reliées respectivement aux roues arrière du véhicule par l'intermédiaire de liaisons formant pivot, et les deuxièmes extrémités sont reliées à la caisse du véhicule par l'intermédiaire de liaisons élastiques formant également des liaisons pivot sur la caisse.

Un but de la présente invention consiste à loger le groupe électromoteur et son module d'alimentation au voisinage d'un des trains du véhicule, et notamment au voisinage du train arrière du véhicule, sous le coffre, avec un encombrement en Z réduit pour limiter l'impact de cet encombrement sur le volume utile de l'habitacle ou du coffre.

On connaît, notamment du document EP 1 266 783, un groupe électromoteur disposé au voisinage du train avant d'un véhicule pour la traction électrique de ce dernier.

Le document WO 2009/031331 A1 décrit un véhicule comprenant les caractéristiques du préambule de la revendication 1.

Le groupe électromoteur est formé d'une machine électrique et de son réducteur. Il est disposé sensiblement transversalement par rapport au véhicule, l'axe du réducteur correspondant sensiblement à l'axe des roues.

Le groupe électromoteur est fixé sur le premier étage d'un châssis à deux étages ; le premier étage du châssis étant lui-même fixé et suspendu à la caisse du véhicule.

Le deuxième étage du châssis, surmontant le groupe électromoteur, sert de support à une pile à combustible et à une unité de commande de puissance fixé sur le dessus de la pile à combustible.

Un tel empilement suivant l'axe en Z du véhicule est relativement encombrant et une transposition de cet empilement à l'arrière du véhicule au voisinage du train arrière est rédhibitoire dans une optique de préserver un maximum de volume utile de l'habitacle ou du coffre.

La présente invention a pour put de pallier cet inconvénient en proposant une implantation compacte permettant d'optimiser l'encombrement d'un groupe électromoteur et son module d'alimentation pour limiter son impact sur le volume utile de l'habitacle ou du coffre.

Un autre avantage découlant de l'implantation selon l'invention, est de permettre de localiser dans un même espace sous caisse, le groupe électromoteur et son module d'alimentation (bloc batteries).

A cet effet, la présente invention propose un véhicule, notamment un véhicule automobile, comportant au moins un groupe électromoteur de traction et un module d'alimentation électrique apte à alimenter le groupe électromoteur de traction, un train roulant couplé mécaniquement au groupe électromoteur, et un châssis fixé à la caisse du véhicule, au voisinage du train, sur lequel est fixé le groupe électromoteur et le module d'alimentation.

Le véhicule est caractérisé en ce que le châssis délimite une plate-forme fixée sous la caisse du véhicule, entre la caisse du véhicule et un plancher séparant un volume utile du véhicule faisant partie de l'habitacle ou étant adjacent à l'habitacle, et en ce que le châssis est apte à recevoir et supporter le groupe électromoteur et le module d'alimentation ; le groupe électromoteur et le module d'alimentation étant disposés de part et d'autre du châssis.

Selon une caractéristique, le châssis comporte trois moyens de fixation aptes à suspendre le groupe électromoteur sous le châssis et agencés de manière à garantir l'isostatisme du groupe électromoteur par rapport au châssis.

Selon une autre caractéristique, le châssis comporte des moyens formant support pour le module d'alimentation ; les moyens formant support affleurant le châssis.

Selon une autre caractéristique, le châssis est réalisé à base d'éléments tubulaires assemblés les uns aux autres pour définir un quadrilatère délimitant une surface d'accueil pour le bloc d'alimentation.

Selon une autre caractéristique, les moyens de fixation du groupe électromoteur et les moyens formant support pour le module d'alimentation sont rapportés solidairement sur les éléments tubulaires.

Selon une caractéristique, le train roulant est un train arrière à traverse déformable intégrant une barre anti-devers.

Selon une autre caractéristique, le châssis, équipé du groupe électromoteur et du module d'alimentation, est disposé au voisinage immédiat et à l'arrière de la traverse déformable.

Selon une autre caractéristique, le châssis, équipé du groupe électromoteur et du module d'alimentation, présente un encombrement minimal suivant l'axe en Z, encombrement qui reste compatible d'une implantation sous le plancher du véhicule et au voisinage du train arrière.

Selon une caractéristique, le plancher correspond au plancher du coffre du véhicule.

Selon une caractéristique, le plancher correspond au plancher de l'habitacle qui est apte à supporter une troisième rangée de sièges.

D'autres caractéristiques et avantages de l'invention apparaîtront au cours de la description qui va suivre, donnée à titre d'exemple et faite en référence aux dessins annexés, sur lesquels :
- la figure 1 est une vue de dessous d'une partie arrière d'un véhicule automobile selon l'invention sur lequel sont installés un groupe électromoteur et son module d'alimentation ;
- la figure 2 est une vue de côté arrière du véhicule selon l'invention, laissant visible le groupe électromoteur et son module d'alimentation ainsi que le châssis les supportant ; et
- la figure 3 est une vue en perspective du châssis apte à supporter le groupe électromoteur et le module d'alimentation d'un véhicule selon l'invention.

Sur les figures, les mêmes éléments portent la même référence numérique.

Le référentiel utilisé sur les figures est un référentiel à trois dimensions XYZ utilisé habituellement par l'homme du métier pour représenter le véhicule dans l'espace.

Un tel référentiel est notamment utilisé dans le document FR 0956234.

L'avant du véhicule est repéré par les lettres AV et l'arrière du véhicule par les lettres AR.

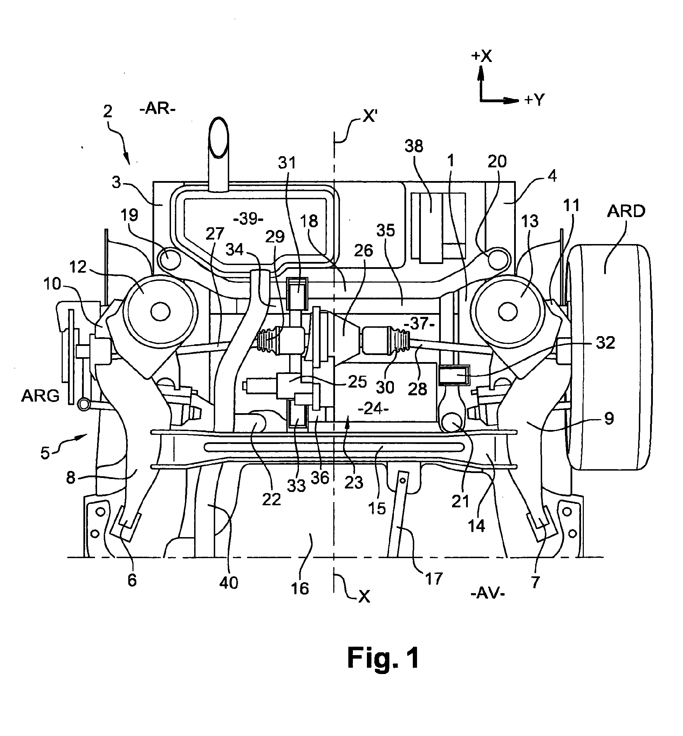

Sur la figure 1, on a représenté le dessous de la partie arrière de la caisse 1 d'un véhicule 2 qui peut être un véhicule automobile hybride (thermique/électrique) ou tout électrique, de type rechargeable ou non.

Le dessous de caisse 1 supporte différents organes qui sont décrits ci-après.

Le pare-choc n'a pas été représenté et on peut distinguer les amortisseurs de choc arrière 3 et 4 qui prolongent les longeronnets de la structure de caisse 1.

Sur cette figure, on distingue le train arrière 5 du véhicule 2. Ce train 5 est un train arrière à traverse déformable en forme de "H". Il est fixé à la caisse 1 du véhicule 2 par l'intermédiaire de deux liaisons pivot 6 et 7 solidaires respectivement des deux extrémités des bras longitudinaux avant 8 et 9. Les extrémités des deux bras arrière 10 et 11 sont quant à elles reliées respectivement aux deux roues arrière droite ARD et gauche ARG dont une seule, la roue arrière droite ARD, est représentée. Ces extrémités supportent également respectivement deux coupelles 12 et 13 recevant les amortisseurs du train arrière 5, non visibles sur la figure. Une traverse déformable 14, de section en forme de U, relie les deux bras longitudinaux 6, 10 et 7, 11 entre eux. La traverse 14 intègre une barre anti-devers 15.

On distingue en avant du train 5 une partie d'un réservoir de carburant 16 avec son système de fixation 17 à la caisse 1.

On distingue également à l'arrière de la traverse déformable 14, un châssis tubulaire 18 de forme générale rectangulaire qui est fixé à la caisse 1 par quatre fixations élastiques 19 à 22.

Le châssis 18 supporte un groupe électromoteur 23 comportant une machine électrique 24 et un réducteur de vitesse 25 couplé au rotor de la machine électrique 24.

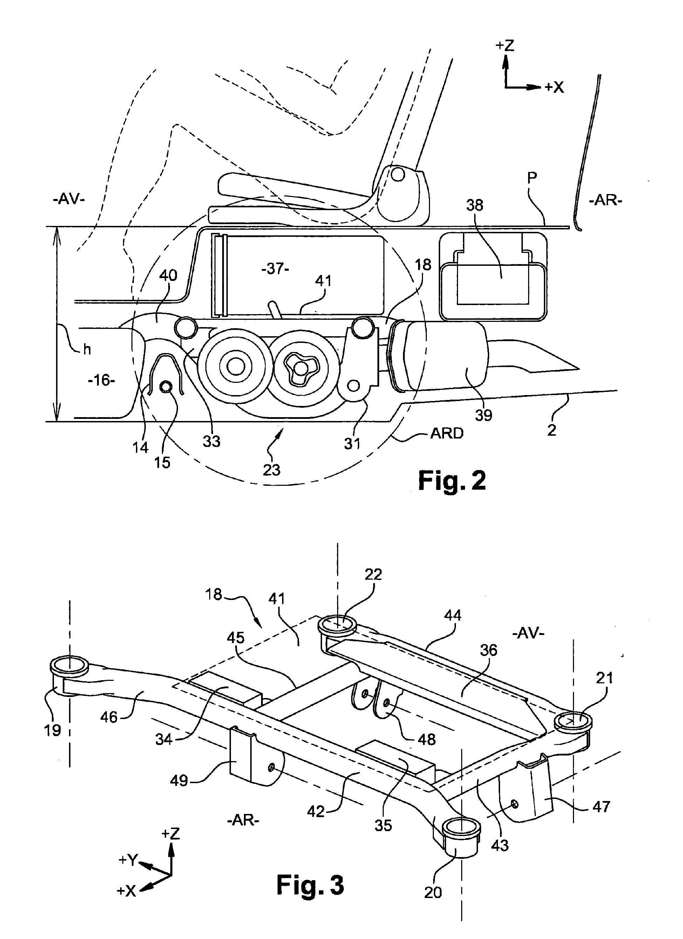

Le châssis 18 sera décrit plus en détail ci-après en référence à la figure 3.

Les roues arrière ARG, ARD sont reliées mécaniquement au réducteur 25 par l'intermédiaire d'un différentiel 26, couplé en sortie du réducteur 25. Le différentiel 26 est lui-même couplé aux deux bras de transmission 27 et 28 et leurs joints homocinétiques respectifs 29 et 30 appelés également joints de cardans.

Le groupe électromoteur 23 est fixé au châssis 18 par l'intermédiaire de trois liaisons élastiques 31 à 33 agencées de manière à garantir l'isostatisme du groupe électromoteur 23 par rapport au châssis 18.

On distingue également sur la figure 1, à l'arrière plan du châssis 18, trois supports plats, formant tablettes 34 à 36, qui sont solidaires du châssis 18.

Ces trois tablettes 34 à 36 reçoivent un module d'alimentation 37 constitué ici d'un bloc de batteries d'accumulateur. Une unité électronique de puissance 38 est directement fixée à la caisse 1 à l'arrière du châssis 18 et donc à l'arrière du bloc de batteries 37. Dans cette implantation, l'unité électronique de puissance 38 est déportée du bloc de batteries 37.

Le pot d'échappement 39 est également disposé et fixé sous la caisse 1 à l'arrière du châssis tubulaire 18 en étant déporté latéralement par rapport à l'axe longitudinal XX' du véhicule passant par le plan médian du véhicule appelé également plan d'origine Y.

Toujours en référence à la figure 1, la ligne d'échappement s'étend sensiblement parallèlement à l'axe longitudinal XX' du véhicule 2 et passe successivement de l'avant AV vers l'arrière AR du véhicule 2 : au dessus de la traverse déformable 14 au voisinage de l'intersection de la traverse 14 et du bras longitudinal 8, puis descend pour passer sous l'arbre de transmission 27 pour remonter jusqu'au châssis 18 avant de rejoindre le pot d'échappement 39. Dans sa partie la plus en saillie sous la caisse 1 du véhicule 2, la ligne d'échappement 40 se trouve sensiblement au même niveau que le bas du groupe électromoteur 23.

En référence à la figure 2, qui représente la partie arrière du véhicule 2 en vue de côté, seuls les organes décrits ci-dessus et qui ont un impact direct sur l'encombrement h en Z, ont été rendus visibles.

Les contours de la carrosserie du véhicule 2 et de la roue arrière droite ARD du véhicule 2 ont été représentés en traits "fantômes" pour ne pas surcharger la figure. Le plancher P sur lequel ont été représentés un siège de troisième rang et son occupant, est représenté par une ligne en trait fort.

Sur cette figure, on distingue de bas en haut, entre le bas de la caisse 2 et le plancher P, suivant l'axe en Z, le groupe électromoteur 23 en partie basse de la caisse 2 du véhicule, le châssis tubulaire 18 supportant le groupe électromoteur 23 et le module d'alimentation 37 constitué du bloc de batteries.

Le châssis tubulaire 18 définit donc une plate-forme sous laquelle est fixé en suspension le groupe électromoteur 23 ; le dessus de cette plate-forme supportant le bloc de batteries 37. Le bloc de batteries 37 a une forme générale parallélépipédique et sa base rectangulaire coopère avec la surface supérieure 41 du châssis 18 dont l'assemblage tubulaire, par exemple un assemblage mécano-soudé, définit un quadrilatère délimitant cette surface supérieure 41.

La figure 3 illustre un châssis tubulaire 18 apte à recevoir et supporter un groupe électromoteur 23 et son module d'alimentation 37.

Comme déjà introduit précédemment, le châssis 18 comporte un assemblage d'éléments tubulaires de section circulaire ou sensiblement circulaire.

Quatre éléments tubulaires 42 à 45 sont assemblés entre eux pour définir une plate-forme apte à recevoir et supporter le groupe électromoteur 23 ainsi que son module d'alimentation 37.

Ces tubes 42 à 45 sont parallèles deux à deux. Deux éléments 43, 45 des quatre éléments tubulaires 42 à 45, parallèles entre eux, sont de longueur sensiblement identique et définissent respectivement deux éléments tubulaires dits longitudinaux : un élément tubulaire gauche 45 et un élément tubulaire droit 43.

Les deux autres éléments tubulaires 42, 44 définissent respectivement deux éléments tubulaires dits transversaux : un élément tubulaire avant 44 et un élément tubulaire arrière 42.

L'élément tubulaire arrière 42 est plus long que l'élément tubulaire avant 44 et une de ses extrémités s'étend au-delà de l'extrémité correspondante de l'élément tubulaire avant 44.

Les extrémités des éléments tubulaires 42 à 45 supportent des fixations de type liaison pivot élastique 19 à 22 dont l'axe de pivot s'étend suivant l'axe en Z.

Une extrémité de l'élément tubulaire avant 44 coïncide avec une extrémité de l'élément tubulaire droit 43.

L'allongement 46 de l'élément tubulaire arrière 42 permet de déporter la fixation 19 au-delà du pot d'échappement 39 pour sa fixation sur la caisse 1 du véhicule 2. On rappelle ici que dans l'implantation décrite, le pot d'échappement 39 a été déporté latéralement de l'axe XX'.

Le châssis 18 comporte ainsi quatre fixations 19 à 22 qui assurent la fixation souple du châssis 18 sur la caisse 1 et donc de l'ensemble groupe électromoteur 23 /module d'alimentation 37.

Le châssis tubulaire 18 comporte en outre trois moyens de fixation 47 à 49 aptes à supporter le groupe électromoteur 23 de manière isostatique. Ces moyens de fixation 47 à 49 définissent des chapes aptes à recevoir respectivement chacune une liaison pivot 32, 31, 33 dont deux 48 et 49 ont un axe de pivot s'étendant suivant l'axe en Y et la troisième 47 suivant l'axe en X.

Le châssis tubulaire 18 comporte en outre trois tablettes 34 à 36 fixées solidairement aux éléments tubulaires 42 à 45. Une première tablette 36, la plus longue, relie les deux éléments tubulaires gauche 45 et droit 43 en longeant l'élément tubulaire avant 44. Les deuxième et troisième tablettes 34 et 35 sont disposées respectivement dans les angles formés par les éléments tubulaires gauche 45 et arrière 42, et les éléments tubulaires droit 43 et arrière 42. Les largeurs des tablettes 34 à 36 sont sensiblement identiques et elles affleurent la partie supérieure des éléments tubulaires 42 à 45 de manière à présenter une surface d'accueil 41 pour la base du module électrique 37. Cette surface d'accueil 41 est symbolisée par une ligne fermée en trait interrompu.

La longueur et la largeur des tablettes 34 à 36 sont déterminées pour offrir une assise optimale pour le module d'alimentation 37.

L'ensemble formé par le châssis équipé du groupe électromoteur et du module d'alimentation définit un ensemble compact et modulaire dont la dimension h suivant l'axe en Z est optimisée de manière à être compatible d'une implantation sous caisse entre le train roulant et le plancher du véhicule. Le plancher peut séparer un volume utile du véhicule, faisant partie de l'habitacle, ou étant adjacent à l'habitacle.

L'ensemble est dit modulaire car il peut être monté rapidement sous la caisse et s'adapter assez facilement sous la caisse d'un véhicule non préalablement prévu pour supporter une machine électrique de traction pour entraîner les roues arrière du véhicule.

La présente invention exploite avantageusement la forme du train arrière à traverse déformable pour optimiser cette implantation. Cependant, toute autre architecture de train peut être envisagée sans pour autant sortir du cadre de la présente invention dans la mesure où l'implantation de l'ensemble compact groupe électromoteur/châssis/module d'alimentation, au sein de cette architecture, reste compatible d'un encombrement en Z minimal.

## Revendications

1. Véhicule (2), notamment un véhicule automobile, comportant au moins un groupe électromoteur de traction (23) et un module d'alimentation électrique (37) apte à alimenter le groupe électromoteur de traction (23), un train roulant (5) couplé mécaniquement au groupe électromoteur (23), et un châssis (18) tubulaire de forme générale rectangulaire, fixé à la caisse (1) du véhicule (2), au voisinage du train (5), sur lequel est fixé le groupe électromoteur (23) et le module d'alimentation (37) de part et d'autre du châssis (18), le dessus du châssis (18) définissant une plate-forme supportant le module d'alimentation (37), le châssis (18) étant équipé du groupe électromoteur (23) et du module d'alimentation (37) étant implanté sous la caisse (1) entre le train roulant (5) et le plancher (P) du véhicule (2) **caractérisé en ce que** le train roulant (5) est un train arrière à traverse déformable (14) intégrant une barre anti-devers (15) et le châssis étant disposé au voisinage immédiat et à l'arrière de la traverse déformable (14).

2. Véhicule (2) selon la revendication précédente, **caractérisé en ce que** le châssis (18) comporte trois moyens de fixation (47 à 49) aptes à suspendre le groupe électromoteur (23) sous le châssis (18) et agencés de manière à garantir l'isostatisme du groupe électromoteur (23) par rapport au châssis (18).

3. Véhicule (2) selon l'une quelconque des revendications précédentes, **caractérisé en ce que** le châssis (18) comporte des moyens formant support (34 à 36) pour le module d'alimentation (37) ; les moyens formant support (34 à 36) affleurant le châssis (18).

4. Véhicule (2) selon l'une quelconque des revendications précédentes, **caractérisé en ce que** le châssis (18) est réalisé à base d'éléments tubulaires (42 à 45) assemblés les uns aux autres pour définir un quadrilatère délimitant une surface d'accueil (41) pour le bloc d'alimentation (37).

5. Véhicule (2) selon la revendication précédente, **caractérisé en ce que** les moyens de fixation (47 à 49) du groupe électromoteur (23) et les moyens formant support (34 à 36) pour le module d'alimentation (37) sont rapportés solidairement sur les éléments tubulaires (42 à 45).

6. Véhicule (2) selon l'une des revendications 1 à 5, **caractérisé en ce que** le châssis (18), équipé du groupe électromoteur (23) et du module d'alimentation (37), présente un encombrement (h) minimal suivant l'axe en Z, encombrement (h) qui reste compatible d'une implantation sous le plancher (P) du véhicule (2) et au voisinage du train arrière (5).

7. Véhicule (2) selon la revendication 6, **caractérisé en ce que** le plancher (P) correspond au plancher du coffre du véhicule (2).

8. Véhicule (2) selon la revendication 6, **caractérisé en ce que** le plancher (P) correspond au plancher de l'habitacle qui est apte à supporter une troisième rangée de sièges.

## Patentansprüche

1. Fahrzeug (2) insbesondere ein Kraftfahrzeug, das mindestens eine elektromotorische Zugeinheit (2) und ein Stromversorgungsmodul (37) aufweist, das geeignet ist, um die elektromotorische Zugeinheit (23) zu versorgen, ein Fahrwerk (5), das mechanisch mit der elektromotorischen Einheit (23) gekuppelt ist, und ein röhrenförmiges Chassis (18) mit allgemeiner Rechteckform, das an der Karosserie (1) des Fahrzeugs (2) in der Nähe des Fahrwerks (5) befestigt ist und auf dem die elektromotorische Einheit (23) und das Versorgungsmodul (37) auf jeder Seite des Chassis (18) befestigt sind, wobei die Oberseite des Chassis (18) eine Plattform bildet, die das Versorgungsmodul (37) trägt, wobei das Chassis (18) mit der elektromotorischen Einheit (23) ausgerüstet ist und mit dem Versorgungsmodul (37), das unter der Karosserie (1) zwischen dem Fahrwerk (5) und dem Fußboden (P) des Fahrzeugs (2) untergebracht ist, **dadurch gekennzeichnet, dass** das Fahrwerk (5) ein hinteres Fahrwerk mit verformbarem Querträger (14) ist, der eine Querstabilisierungsstange (15) aufweist und wobei das Chassis in unmittelbarer Nähe und hinter dem verformbaren Querträger (14) angeordnet ist.

2. Fahrzeug (2) nach dem vorhergehenden Anspruch, **dadurch gekennzeichnet, dass** das Chassis (18) drei Befestigungsmittel (47 bis 49) aufweist, die geeignet sind, um die elektromotorische Einheit (23) unter dem Chassis (18) aufzuhängen, und die derart eingerichtet sind, dass sie die Isostatik der elektromotorischen Einheit (23) in Bezug zu dem Chassis (18) garantieren.

3. Fahrzeug nach einem der vorhergehenden Ansprüche, **dadurch gekennzeichnet, dass** das Chassis (18) Mittel aufweist, die einen Träger (34 bis 36) für das Versorgungsmodul (37) bilden, wobei die Träger bildenden Mittel (34 bis 36) mit dem Chassis (18) bündig sind.

4. Fahrzeug (2) nach einem der vorhergehenden Ansprüche, **dadurch gekennzeichnet, dass** das Chassis (18) auf der Grundlage röhrenförmiger Elemente (42 bis 45) hergestellt ist, die miteinander zusammengebaut sind, um ein Viereck zu bilden, das eine Aufnahmefläche (41) für den Versorgungsblock (37) bildet.

5. Fahrzeug (2) nach dem vorhergehenden Anspruch, **dadurch gekennzeichnet, dass** die Befestigungsmittel (47 bis 49) der elektromotorischen Einheit (23) und die Träger bildenden Mittel (34 bis 36) für das Versorgungsmodul (37) fest verbunden auf den röhrenförmigen Elementen (42 bis 45) angebaut sind.

6. Fahrzeug (2) nach einem der Ansprüche 1 bis 5, **dadurch gekennzeichnet, dass** das Chassis (18), das mit der elektromotorischen Einheit (23) und dem Versorgungsmodul (37) ausgerüstet ist, einen minimalen Platzbedarf (h) entlang der Achse in Z aufweist, wobei der Platzbedarf (h) mit einer Anbringung unterhalb des Fußbodens (P) des Fahrzeugs (2) und in der Nähe des hinteren Fahrwerks (5) vereinbar bleibt.

7. Fahrzeug (2) nach Anspruch 6, **dadurch gekennzeichnet, dass** der Fußboden (P) dem Fußboden des Kofferraums des Fahrzeugs (2) entspricht.

8. Fahrzeug (2) nach Anspruch 6, **dadurch gekennzeichnet, dass** der Fußboden (P) dem Fußboden des Fahrgastraums entspricht, der geeignet ist, eine dritte Reihe von Sitzen zu tragen.

## Claims

1. A vehicle (2), in particular a motor vehicle, comprising at least one electromotive drive unit (23) and an electric supply module (37) able to supply the electromotive drive unit (23), a running gear (5) coupled mechanically to the electromotive unit (23), and a tubular chassis (18) of general rectangular shape, fixed to the body (1) of the vehicle (2), in the vicinity of the running gear (5), on which is fixed the electromotive unit (23) and the supply module (37) on either side of the chassis (18), the top of the chassis (18) defining a platform supporting the supply module (37), the chassis (18) being equipped with the electromotive unit (23) and with the supply module (37) being installed beneath the body (1) between the running gear (5) and the floor (P) of the vehicle (2), **characterized in that** the running gear (5) is a rear end with deformable cross beam (14) integrating an anti-roll bar (15) and the chassis being arranged in the immediate vicinity and at the rear of the deformable cross beam (14).

2. The vehicle (2) according to the preceding claim, **characterized in that** the chassis (18) comprises three fixing means (47 to 49) able to suspend the electromotive unit (23) beneath the chassis (18) and arranged so as to ensure the isostatism of the electromotive unit (23) with respect to the chassis (18).

3. The vehicle (2) according to any one of the preceding claims, **characterized in that** the chassis (18) comprises support-forming means (34 to 36) for the supply module (37); the support-forming means (34 to 36) being flush with the chassis (18).

4. The vehicle (2) according to any one of the preceding claims, **characterized in that** the chassis (18) is constructed on the basis of tubular elements (42 to 45) assembled with respect to one another to define a quadrilateral delimiting a receiving surface (41) for the supply block (37).

5. The vehicle (2) according to the preceding claim, **characterized in that** the fixing means (47 to 49) of the electromotive unit (23) and the support-forming means (34 to 36) for the supply module (37) are added integrally on the tubular elements (42 to 45).

6. The vehicle (2) according to one of Claims 1 to 5, **characterized in that** the chassis (18), equipped with the electromotive unit (23) and the supply module (37), has a minimum required space (h) along the Z axis, which required space (h) remains compatible with an installation beneath the floor (P) of the vehicle (2) and in the vicinity of the rear end (5).

7. The vehicle (2) according to Claim 6, **characterized in that** the floor (P) corresponds to the floor of the boot of the vehicle (2).

8. The vehicle (2) according to Claim 6, **characterized in that** the floor (P) corresponds to the floor of the passenger compartment which is able to support a third row of seats.
